# EUROPÄISCHE PATENTSCHRIFT

(11) **EP 0 656 702 B1**
(45) Veröffentlichungstag und Bekanntmachung des Hinweises auf die Patenterteilung: **27.02.2002**
(21) Anmeldenummer: 94118808.8
(22) Anmeldetag: 30.11.1994
(51) Int. Cl.: H04H 1/00

(54) **Verfahren und Schaltungsanordnung zum Einfügen von Daten in ein GleichwellenÜbertragungssignal**
Method and circuit for inserting data in a common wave radiotransmission
Méthode et circuit pour l'insertion de données dans une émission en onde commune

(30) Priorität: 03.12.1993 DE 4341211
(43) Veröffentlichungstag der Anmeldung: 07.06.1995
(73) Patentinhaber: GRUNDIG Aktiengesellschaft, 90471 Nürnberg (DE)
(72) Erfinder: Gärtner, Eduard, GRUNDIG E.M.V., Max Grundig, D-90748 Fürth (DE)

(56) Entgegenhaltungen:
- EP-A- 0 441 730
- DE-A- 4 102 408
- DE-A- 4 138 770
- GB-A- 2 261 142

## Beschreibung

Die Erfindung betrifft ein Verfahren zum zeit- und frequenzsynchronen Einfügen von Daten in ein nach einem Mehrkanalübertragungsverfahren gebildetes Übertragungssignal gemäß dem Oberbegriff der Patentansprüche 1 oder 13 und eine Schaltungsanordnung zur Durchführung des Verfahrens gemäß dem Oberbegriff der Patentansprüche 6, 7, 8 oder 9.

Zur Verbesserung der Übertragungsqualität und der Nutzung der Übertragungsbandbreite werden zunehmend digitale Übertragungsverfahren eingesetzt. Bei der digitalen Rundfunkübertragung, unter der Abkürzung DAB (Digital Audio Broadcasting) bekannt, wird ein Mehrkanalübertragungsverfahren mit einer Rahmenstruktur benutzt. Die Verteilung der Übertragungsdaten erfolgt dabei nach dem aus der WO 88/00417 bekannten COFDM-Verfahren (Coded Orthogonal Frequency Division Multiplex) auf eine Vielzahl von Trägerfrequenzen.

Dadurch verringert sich die Datenrate für jede Trägerfrequenz entsprechend, wodurch die Symboldauer vergrößert werden kann. Dies erhöht insbesondere die Resistenz gegen Störungen, die durch Mehrwegeempfang verursacht werden. Weitere Einzelheiten zum DAB können der Veröffentlichung "Terrestrischer digitaler Tonrundfunk" von Lothar Starke, erschienen in der Zeitschrift "telekom praxis", Nr. 12/92, Seiten 27-31, entnommen werden.

Ein derartiges Mehrkanalübertragungssystem bietet auch die Möglichkeit, eine digitale Fernsehübertragung zu realisieren, wie dies der Veröffentlichtung "Digitale Fernsehübertragung - Systemkonzepte und Einführungschancen" von Dr. R. Kays, erschienen in der Zeitschrift "Fernseh- und Kinotechnik", Nr. 9/1992, Seiten 559-570, zu entnehmen ist. Auch bei einer digitalen Fernsehübertragung kann durch einen Gleichwellenbetrieb des Mehrkanalübertragungssystems der Bedarf an Bandbreite bei einem z.B. landesweiten Sendernetz im Vergleich zu herkömmlichen analogen Übertragungsverfahren reduziert werden.

Bei Hörfunk- oder Fernsehsendungen in einem Gleichwellennetz tritt jedoch das Problem auf, daß Informationen, die nur regional von Interesse sind, dennoch im gesamten Gleichwellennetz ausgesendet werden müssen, da die im Gleichwellenbetrieb ausgesendeten Daten per Definition im gesamten Gleichwellennetz identisch sein müssen.

Einen Ausweg zeigt ein Verfahren zur Übertragung regional unterschiedlicher Informationen in Gleichwellennetzen auf, das unter dem Aktenzeichen P 42 22 877.8 zum Patent angemeldet wurde. Bei diesem Verfahren werden regional unterschiedliche Informationen durch Aussenden einzelner Trägerfrequenzen während der Nullsymboldauer übertragen. Dabei wird durch eine entsprechend geringe Anzahl Trägerfrequenzen sichergestellt, daß die im Nullsymbol übertragene Energie nicht zu groß wird und eine zeitliche Synchronisation weiterhin möglich bleibt. Die zur Übertragung von Zusatzinformationen im Nullsymbol benutzten Trägerfrequenzen müssen so ausgewählt werden, daß aneinander angrenzende Sender unterschiedliche Trägerfrequenzen benutzen.

Dabei werden aufgrund der Einbindung der nur regional zu übertragenden Information in den Übertragungsrahmen des Gleichwellennetzes sehr hohe Anforderungen an die zeitliche und frequentielle Synchronsiation der einzufügenden Information gestellt.

Um eine Frequenzsynchronisation zu ermöglichen, ist es aus der EP-A1-0 441 730 bekannt, ein Symbol, das eine Frequenzreferenz beinhaltet, zu übertragen. Vorzugsweise wird dazu das Nullsymbol verwendet. Dabei kann die Frequenzreferenz aus einer einzelnen Trägerfrequenz oder einem Kamm von Trägerfreqeunzen bestehen. Im Empfänger wird aus der empfangenen Trägerfrequenz ein Signal zur automatischen Frequenzregelung erzeugt.

Aus dem Buch "Digital Communication" von Edward A. Lee und David G. Messerschmitt, erschienen 1988 bei Kluwer Academic Publishers in Boston, insbesondere Kapitel 16 und 17, sind zeit- und frequenzmultiplexe übertragungsverfahren bekannt. Bei diesen werden Referenz- und Verkehrsbursts zur Definition von Übertragungsrahmen, zur Synchronisation und zur Zuordnung zu Zeitschlitzen übertragen.

Übertragungsverfahren, bei denen die Sender eines Rundfunkprogramms im Gleichwellenbetrieb arbeiten, sind der Entgegenhaltung nicht zu entnehmen. Weiterhin ist nicht bekannt, daß eine Einfügung von Übertragungsdaten in ein Übertragungssignal erfolgt. Die benutzten Referenz- und Verkehrsbursts ermöglichen es nicht, daß die zeitliche Synchronisation und die Synchronisation in der Frequenz von Daten, die in ein im Gleichwellenbetrieb ausgestrahltes DAB-Übertragungssignal eingefügt werden sollen, genau genug erfolgt.

Aus der DE-A1-41 28 713 ist ein Verfahren zur Messung der Trägerfrequenzablage in einem Mehrkanalübertragungssystem bekannt. Hierbei wird ein Testsignal vom Sender abgestrahlt, das mindestens eine periodisch fortgesetzte, differentiell codierte, selbstorthogonale Sequenz konstanter Amplitude enthält. Im Empfänger wird dieses Testsignal ausgewertet und liefert unter anderem eine Stellgröße für die automatische Frequenzregelung.

Aus der WO92/05646 ist ein Empfänger für das Mehrkanalübertragungssystem bekannt. In diesem wird das Empfangssignal demoduliert und anschließend die Lage der komplexen Ebene in Abhängigkeit einer Anzahl digitaler Empfangswerte geschätzt, wodurch die Entscheidungsschwellen für die Empfangssignale adaptiv eingestellt werden. Wird dabei festgestellt, daß sich die komplexe Ebene dreht, bedeutet dies eine Frequenzablage im Empfänger, und der lokale Oszillator wird durch einen Frequenzregelkreis nachgeregelt.

Aus der DE-A1-41 13 584 ist ein Verfahren und eine Einrichtung zur Übertragung digitaler Tonsignale von Tonstudios zu den einzelnen Sendestationen eines Rundfunk-Sendernetzes bekannt. Hierbei werden die digitalen Tonsignale im Basisband nach dem DS1-Verfahren codiert und mehrere der so codierten Signale nach dem DSR-Verfahren über eine Satellitenstrecke zu den einzelnen Sendestationen übertragen.

Als nachteilig ist bei den bekannten Verfahren anzusehen, daß eine Zeit- und Frequenzsynchronisation zusätzlicher in das Übertragungssignal einzufügender Daten unter Ausnutzung der ohnehin nach dem COFDM-Verfahren übertragenen Signale nicht möglich ist.

Aus DE 4138770 A1 ist ein digitales Mehrkanalübertragungsverfahren bekannt. Dieses Übertragungsverfahren arbeitet rahmenorientiert. Der Rahmen enthält hierbei mindestens ein Nullsymbol. In diesem Nullsymbol werden Daten übertragen.

Aufgabe der vorliegenden Erfindung ist es deshalb, ein Verfahren und eine Schaltungsanordnung anzugeben, die es ermöglicht, in das Übertragungssignal eines Mehrkanalübertragungssystems Daten zeit- und frequenzgenau einzufügen. Weiterhin soll ein Übertragungskanal zwischen einer Zentrale und den einzelnen Sendern des Gleichwellennetzes zur Übertragung von Steuerinformation zu den Sendern bereitgestellt werden.

Erfindungsgemäß wird diese Aufgabe durch die Merkmale der Patentansprüche 1, 6, 7, 8, 9 und 13 gelöst.

Die Vorteile der Erfindung liegen insbesondere darin, daß ein ohnehin zur zeitlichen Synchronisation übertragenes Zeitreferenzsymbol verwendet wird. Dadurch entsteht kein Bedarf an zusätzlichen Synchronisationssymbolen. Das Zeitreferenzsymbol dient der zeitlichen Fensterung des Übertagungssignals bzw. der zeitlich genauen Einfügung zusätzlicher Daten im Mehrkanalübertragungssystem sowie der zeitlichen Steuerung der Frequenzgeneratoren. Durch die zeitliche Fensterung des Übertragungssignals besteht die Möglichkeit im gefensterten Zeitraum eine Datenübertragung zwischen überregionaler Zentrale und den Sendern des Gleichwellennetzes durchzuführen.

Einen weiteren Vorteil stellt die Benutzung des Zeit-Frequenz-Phasen-Referenzsymbols dar, da auch dieses. ohnehin mit dem Übertragungssignal zur Verfügung steht. Die Erzeugung und Übertragung eines speziellen Frequenzreferenzsymbols ist dann nicht erforderlich.

Weiterhin vorteilhaft ist die Verwendung ohnehin zur Verfügung stehender Zeit- oder Frequenzreferenzsignale, wie z.B. das DFC-77 Signal. Dadurch entfällt die relativ aufwendige Erzeugung eines Frequenzreferenzsignals.

Weitere Ausgestaltungen und Vorteile der Erfindung ergeben sich aus den Unteransprüchen und der nachfolgenden Beschreibung der Erfindung anhand von Figuren. Es zeigt:
- Fig. 1: die Darstellung eines beispielhaften Rahmens des einem Mehrkanalübertragungssystem zugrundeliegenden Übertragungssignals in der Zeit-Frequenz-Ebene,
- Fig. 2: die Darstellung aus Fig. 1 mit zusätzlichen regional übertragenen Daten im Nullsymbol,
- Fig. 3: die schematische Darstellung eines Gleichwellennetzes in dem überregional sowie regional Übertragungsdaten erzeugt werden und
- Fig. 4: eine Schaltungsanordnung zum zeit- und frequenzgenauen Einfügen zusätzlicher regionaler Daten in ein hochfrequentes Übertragungssignal.

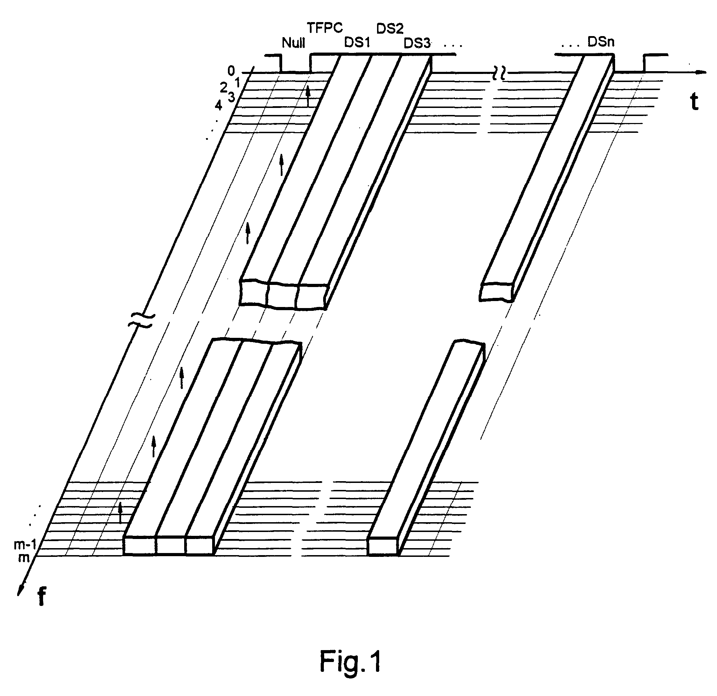

In Figur 1 ist ein Rahmen eines Übertragungssignals nach einem Mehrkanalübertragungsverfahren in der Zeit-Frequenz-Ebene dargestellt. Dieser Rahmen beginnt mit einem Null-Symbol Null, das im Empfänger zur Rahmensynchronisation dient und in dem keine Daten im Gleichwellennetz übertragen werden. Danach folgt ein Zeit-Frequenz-Phasen-Referenzsymbol TFPC, das im Empfänger zur Feinsynchronisation der Zeit, sowie zur Synchronisation von Frequenz und Phase benötigt wird. Anschließend folgen die Datensymbole DS1 bis DSn, in denen die Daten im Gleichwellennetz übertragen werden. Im dargestellten Beispiel wird das Übertragungssignal auf m+1 Trägerfrequenzen verteilt. Die Aussendung dieses Übertragungssignals in einem Gleichwellennetz bedingt nun, daß alle Sender, die dieses Gleichwellennetz bilden, frequenzstarr gekoppelt sind. Die Frequenzabweichungen einzelner Gleichwellensender müssen dabei sehr gering bleiben, da sonst die Bitfehlerrate deutlich ansteigt.

Sollen Daten nicht über das ganze Gleichwellennetz übertragen werden, sondern nur regional, kann das Null-Symbol Null hierfür genutzt werden, wovon im folgenden ausgegangen wird.

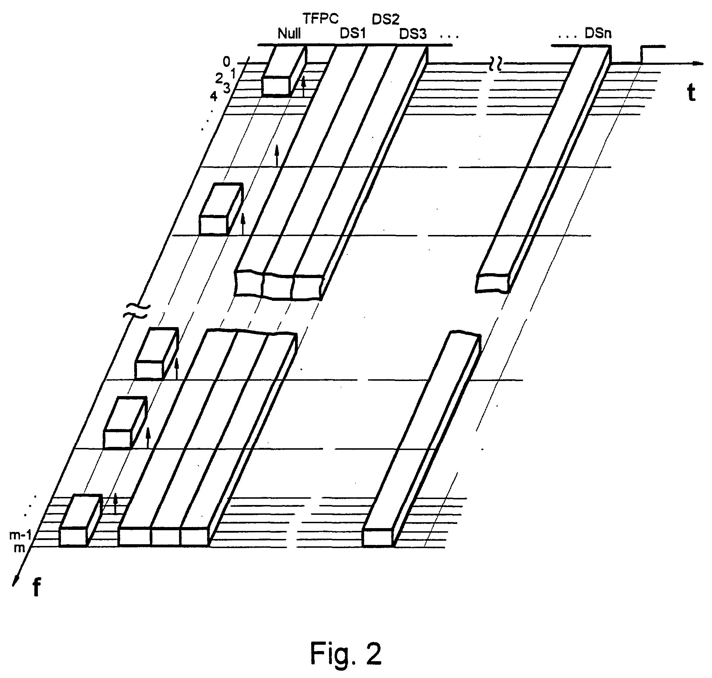

Fig. 2 zeigt exemplarisch, wie zusätzlich Daten im Null-Symbol Null übertragen werden können. Im Unterschied zu Fig. 1 wird in Fig. 2 der Zeitschlitz des Null-Symbols Null zusätzlich genutzt, um über ausgewählte Trägerfrequenzen Daten zu übertragen. Hierbei wird durch die Anzahl der benutzten Trägerfrequenzen sichergestellt, daß die im Null-Symbol Null übertragene Leistung wesentlich geringer ist als die in den Datensymbolen DS1 bis DSn übertragene Leistung. Dadurch wird die Rahmensynchronisation durch die Übertragung zusätzlicher Daten nicht beeinträchtigt.

Die im Null-Symbol Null übertragenen Daten werden im Frequenz-Multiplex von den einzelnen Sendern abgestrahlt, so daß beispielsweise ein oder mehrere der im Null-Symbol Null eingezeichneten Frequenzbereiche oder Einzelträgerfrequenzen je einem Sender des Gleichwellennetzes zugeordnet werden können. Dadurch entsteht die Notwendigkeit, die regional übertragenen Daten zeit- und frequenzgenau in das Null-Symbol Null einzufügen, um das Sendesignal zu erzeugen.

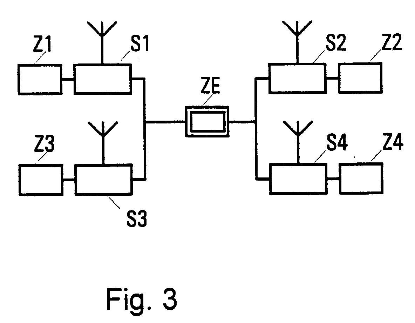

Fig. 3 zeigt ein einfaches Gleichwellennetz, bestehend aus einer Zentrale ZE, in der das im Gleichwellenbetrieb in einer ersten Hochfrequenzlage abgestrahlte Übertragungssignal gemäß Fig. 1 erzeugt wird. Dieses kann sowohl im Basisband leitungsgebunden oder in einer zweiten Hochfrequenzlage über Funk an die Gleichwellensender S1 bis S4 übertragen werden. Den Gleichwellensendern S1 bis S4 sind weitere regionale Zentralen Z1 bis Z4 zugeordnet, welche die in das Übertragungssignal nach Fig. 1 einzufügenden Daten liefern, wodurch das Sendesignal gemäß Fig. 2 erzeugt wird.

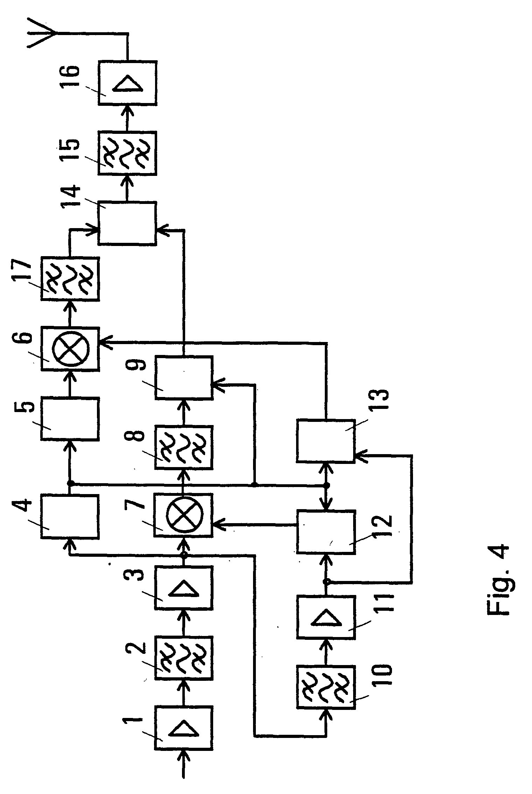

In Fig. 4 ist eine Schaltungsanordnung zum zeit- und frequenzgenauen Einfügen von Daten in ein Übertragungssignal eines Mehrkanalübertragungssystems dargestellt. Durch diese Schaltungsanordnung werden die von der Zentrale ZE ohnehin für die Empfänger übertragenen Referenzsignale zur zeitlichen und frequentiellen Synchronisation ausgewertet.

Das Eingangssignal der Schaltungsanordnung wird zunächst im Verstärker 1 verstärkt und durch ein Bandpaßfilter 2 wird das gewünschte Übertragungssignal gemäß Fig.1 aus dem Eingangssignal herausgefiltert. Das derart erzeugte Übertragungssignal wird im Verstärker 3 erneut verstärkt und einer Synchronisierungs-Baugruppe 4, einem Mischer 7 und einem zweiten Bandpaß 10 zugeleitet.

Die Synchronisierungs-Baugruppe 4 erkennt anhand der Signalamplitude bzw. der übertragenen Leistung die Null-Symbole Null der Übertragungsrahmen und dient dem zeitlich synchronen Einfügen zusätzlicher Daten sowie der Fensterung des Übertragungssignals mit Hilfe der Baugruppe 9. Außerdem steuert sie die Frequenzgeneratoren 13 und 14. Die Synchronisierungs-Baugruppe 4 kann durch einen Amplituden- oder Hüllkurvendetektor realisiert werden. Bei einer Auswertung des TFPC-Symbols berechnet die Synchronisierungs-Baugruppe 4 aus diesem Symbol ein Signal zur zeitlichen Synchronisierung. Hierfür ist die relativ aufwendige Berechnung der Fouriertransformierten des übertragenen TFPC-Symbols, die Berechnung der Differenz aus übertragenem und idealem TFPC-Symbol und die Berechnung der inversen Fouriertransformierten der Differenz erforderlich. Daher muß ein Laufzeitausgleich des Übertragungssignals durchgeführt werden.

In Baugruppe 5 ist die gesamte Anordnung zur Erzeugung der Trägerfrequenzen, die in Abhängigkeit von den einzufügenden Daten erzeugt werden, zusammengefaßt. Sobald von der Synchronisierungs-Baugruppe 4 ein Signal an Baugruppe 5 ausgegeben wird, gibt diese die in das Null-Symbol Null einzufügenden Trägerfrequenzen im Basisband oder in einer Zwischenfrequenzlage aus. Anschließend werden die Trägerfrequenzen im Mischer 6 in die Sendefrequenzlage gemischt und unerwünschte Mischprodukte durch ein Bandpaßfilter 17 beseitigt.

Durch Mischer 7 wird das Übertragungssignal gemäß Fig. 1 aus dem Basisband bzw. einer Zwischenfrequenzlage in die Sendefrequenzlage gemischt. Danach werden unerwünschte Mischungsprodukte durch einen Bandpaß 8 beseitigt.

Damit von der Zentrale ZE zu den Gleichwellensendern S1 bis S4 eine Übertragung zusätzlicher Informationen möglich ist, wird das Übertragungssignal in der Baugruppe 9 gefenstert. Wird das Null-Symbol Null zu dieser Datenübertragung benutzt, wird dieser Zeitschlitz nicht von der Baugruppe 9 weitergeleitet, sondern aus dem Übertragungssignal ausgeblendet, wodurch die Amplitude des Ausgangssignals von Baugruppe 9 im Null-Symbol Null für alle Frequenzen identisch Null ist. Die Baugruppe 9 wird dabei vom Ausgangssignal der Synchronisierungs-Baugruppe 4 zeitlich gesteuert. Die Fensterung ermöglicht somit eine Signalübertragung ausschließlich zwischen Zentrale ZE und Gleichwellensendern S1 bis S4, die dazu genutzt werden kann, Steuerdaten zu übertragen. Insbesondere ist die Übertragung von zusätzlichen Frequenzreferenzsymbolen im Null-Symbol Null möglich, welche eine oder mehrere Referenzfrequenzen beinhalten.

Das Ausgangssignal von Verstärker 3 wird einer weiteren Bandpaßfilterung 10 zugeführt und anschließend durch Verstärker 11 verstärkt. Durch die Bandpaßfilterung 10 wird eine Referenzfrequenz aus dem Frequenzreferenzsymbol herausgefiltert, die den Frequenzgeneratoren 12 und 13 als Referenzfrequenz dient. Als Frequenzgeneratoren 12, 13 können Phasen- und/oder Frequenzregelkreise eingesetzt werden, die zeitlich mit dem Zeitschlitz, in dem eine Referenzfrequenz übertragen wird, synchronisiert werden. Dadurch wird erreicht, daß in dem Zeitschlitz, in dem eine bekannte Referenzfrequenz vorliegt, die Frequenzgeneratoren 12 und 13 eine Frequenz mit hoher Genauigkeit erzeugen und während der übrigen Zeitschlitze diese Frequenz nicht ändern.

Die zeitliche Synchronisierung der Frequenzgeneratoren 12 und 13 auf die Zeitschlitze, in denen eine Referenzfrequenz übertragen wird, kann dabei in Abhängigkeit vom Ausgangssignal der Synchronisierungs-Baugruppe 4 erfolgen. Werden Frequenzreferenzsymbole im Null-Symbol Null übertragen, kann das Ausgangssignal nach einer Bandpaßfilterung 10 direkt den Frequenzgeneratoren 12 und 13 zugeführt werden. Wird das Zeit-Frequenz-Phasen-Referenzsymbol TFPC benutzt, um eine Referenzfrequenz zu erzeugen, ist eine zusätzliche Fouriertransformation der mit dem TFPC-Symbol übertragenen Signale erforderlich. Aufgrund der dafür benötigten Rechenzeit ist eine zeitliche Verzögerung des Ausgangssignals von Baugruppe 4 vorzunehmen (nicht eingezeichnet).

Die Frequenzgeneratoren 12 und 13 liefern die von den Mischern 6 und 7 benötigten Frequenzen, um die einzufügenden Daten und das Übertragungssignal des Gleichwellennetzes in die Sendefrequenzlage zu mischen. In Baugruppe 14 werden die einzufügenden Daten zum Übertragungssignal gemäß Fig. 1 addiert und dadurch das Ausgangssignal gemäß Fig. 2 erzeugt. Dabei ist aufgrund der zeitlichen Synchronisation sichergestellt, daß einzufügende Daten lediglich in dem Zeitschlitz vorliegen, in dem das Übertragungssignal des Gleichwellennetzes ausgeblendet wird. Dadurch kann es nicht zu Interferenzen kommen. Durch die anschließende Bandpaßfilterung 15 wird das Ausgangssignal auf die Übertragungsbandbreite des Mehrkanalsystems begrenzt und unerwünschte Mischprodukte der zusätzlich eingefügten Daten werden beseitigt. Im letzten Verarbeitungsschritt erfolgt die Verstärkung des Übertragungssignals auf die gewünschte Sendeleistung in der Baugruppe 16 des jeweiligen Gleichwellensenders.

Alternative Realisierungsformen der beschriebenen Schaltungsanordnung lassen sich durch eine abweichende Anordnung oder Hinzufügen bzw. Weglassen der vorgesehenen Verstärker 1, 3 und 11 erreichen.

Darüberhinaus besteht die Möglichkeit, die Mischer 6 und 7 in Abhängigkeit von der Frequenzlage der auftretenden Signale unterschiedlich anzuordnen. Insbesondere zwei Realisierungsmöglichkeiten, die zur Einsparung des Frequenzgenerators 12, des Mischers 7 und des Bandpasses 8 führen, sollen im folgenden beschrieben werden.

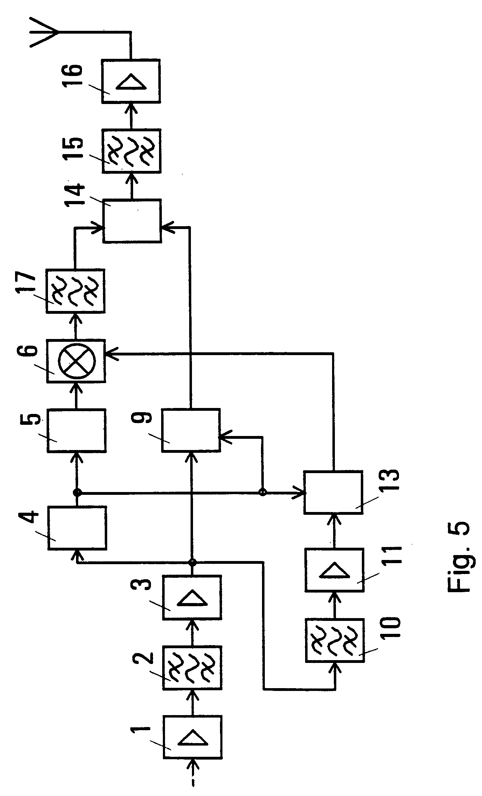

Für Füllsender (Gap-Filler) gemäß Fig. 5, die nicht die gleichen zusätzlichen Daten abstrahlen wie der Gleichwellensender, von dem das Übertragungssignal gemäß Fig. 1 übernommen wird, kann eine als bekannt vorauszusetzende Senderkennung des Gleichwellensenders als Referenz zur Synchronisation benutzt werden. Das zum Einfügen der zusätzlichen Daten in Baugruppe 9 gefensterte Übertragungssignal bleibt dabei in seiner Frequenzlage unverändert. Lediglich die einzufügenden Daten werden im Mischer 6 in die Sendefrequenzlage gemischt. Die übrigen Baugruppen haben die gleichen Funktionen wie in Fig. 4.

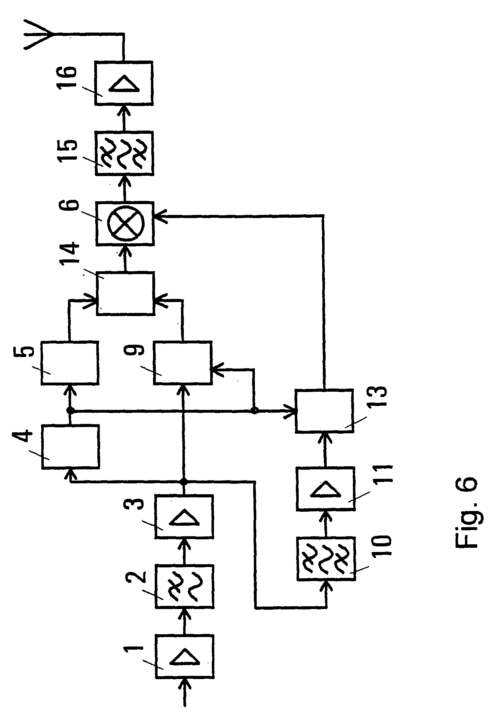

Sofern das Übertragungssignal des Gleichwellennetzes als Basisbandsignal zu den Sendern S1 bis S4 übertragen wird, kann es ohne Veränderung seiner Frequenzlage gemäß Fig. 6 der Baugruppe 9 zur Fensterung zugeführt werden. Dadurch wird Frequenzgenerator 12, Mischer 7 und Bandpaß 8 eingespart. Mischer 6 ist dann ebenfalls nicht für ein frequenzsynchronisiertes Einfügen zusätzlicher Daten erforderlich, wird aber noch zur Konvertierung in die Sendefrequenzlage benötigt. Das Ausgangssignal von Baugruppe 5 liegt ebenfalls im Basisband vor und kann in Baugruppe 14 unmittelbar zum Ausgangssignal von Baugruppe 9 addiert werden. Anschließend ist eine Mischung des Basisbandsignals in die Sendefrequenzlage erforderlich, wozu Mischer 6 zwischen den Baugruppen 14 und 15 angeordnet und ihm das Ausgangssignal des Frequenzgenerators 13 zugeleitet wird. Anschließend erfolgt durch das Bandpaßfilter 15 eine Unterdrückung unerwünschter Mischungsprodukte und durch Verstärker 16 die Verstärkung auf die Sendeleistung.

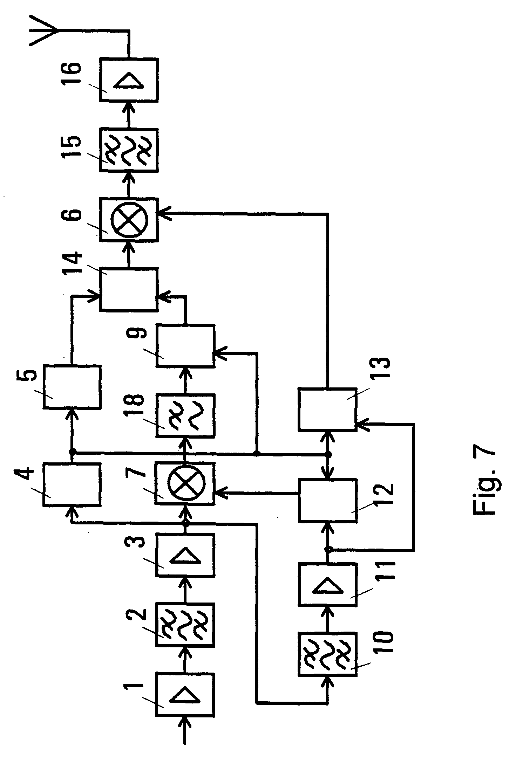

Eine weitere alternative Schaltungsanordnung ist in Fig. 7 dargestellt. Diese ermöglicht im Vergleich zur Schaltungsanordnung aus Fig. 4 eine möglichst weitgehende Signalverarbeitung im Basisband, wodurch an die Baugruppen 5, 9 und 14 geringere Anforderungen bezüglich ihrer Parameter bei hohen Frequenzen gestellt werden.

Das Eingangssignal von Bandpaß 2 kann in einer weitgehend beliebigen Frequenzlage vorliegen. Durch Frequenzgenerator 12 wird eine Frequenz zum Heruntermischen des Übertragungssignals im Mischer 7 in das Basisband bereitgestellt. Die zu erzeugende Frequenz wird dabei durch die Referenzfrequenz, die durch Bandpaß 10 aus dem übertragungssignal herausgefiltert und den Frequenzgeneratoren 12 und 13 zugeleitet wird, festgelegt. Nachdem unerwünschte Mischprodukte durch Tiefpaß 18 herausgefiltert wurden, wird das Übertragungssignal in Baugruppe 9 gefenstert. Dadurch werden Signale, die eventuell im Null-Symbol Null zum Sender übertragen wurden, ausgeblendet. Im Addierer 14 werden zum Übertragungssignal im Null-Symbol Null die einzufügenden Daten addiert. Danach wird das derart erzeugte Summensignal im Mischer 6 in die Sendefrequenzlage gemischt. Das dafür erforderliche Hochfrequenzsignal erzeugt Frequenzgenerator 13 aus der ihm zugeleiteten Referenzfrequenz. Bandpaß 15 beseitigt unerwünschte Mischprodukte und Verstärker 16 verstärkt das Sendesignal auf die gewünschte Sendeleistung. Die zeitliche Synchronisation erfolgt in der Schaltung aus Fig. 7 wie in der Schaltung aus Fig. 4.

Alternativ zu den bisher beschriebenen Ausführungsbeispielen besteht auch die Möglichkeit, das Eingangssignal von Baugruppe 10 zur Frequenzsynchronisation aus einem nicht im Übertragungsrahmen des Mehrkanalübertragungssignals enthaltenen Signal zu erzeugen. Besonders vorteilhaft ist die Auswertung des von der Physikalisch-Technischen Bundesanstalt übertragenen Referenzsignals DFC77, das zur Frequenzsynchronisation benutzt werden kann. Es ist hierfür ein zusätzlicher Empfänger vorzusehen, der aus dem empfangenen DFC77-Signal für die Frequenzgeneratoren 12 und 13 entsprechende Signale mit Referenzfrequenzen erzeugt. Die Baugruppen 10 und 11 könnten dann entfallen.

Eine weitere Möglichkeit besteht in der Nutzung eines Netztaktes von digitalen Nachrichtennetzen, über die das Mehrkanalübertragungssignal den einzelnen Sendern zugeleitet wird. Beispielsweise das Integrated Services Digital Network (ISDN) weist einen konstanten Arbeitstakt auf, der ebenfalls genutzt werden kann, um für die Baugruppe 4 und die Frequenzgeneratoren 12 und 13 ein Referenzsignal zu erzeugen.

Das erfindungsgemäße Verfahren und die Schaltungsanordnung zu dessen Durchführung kann bei allen Übertragungsverfahren eingesetzt werden, die große Anforderungen bezüglich frequentieller und zeitlicher Synchronisation stellen. Insbesondere bei der Übertragung digitaler Videodaten (DVB) und digitaler Audiodaten (DAB) in einem Gleichwellennetz ist es von Vorteil.

## Patentansprüche

1. Verfahren zum zeit- und frequenzsynchronen Einfügen von Daten in ein nach einem Mehrkanalübertragungsverfahren gebildetes Übertragungssignal, welches Synchronisationssymbole für eine Zeit- und Frequenzsynchronisation und eine Rahmenstruktur aufweist und in einem Gleichwellennetz übertragen wird,
**dadurch gekennzeichnet,**
**daß** das Mehrkanalübertragungssignal in dem für die einzufügenden Daten vorgesehenen Zeit- und Frequenzbereich gefenstert wird, wodurch vorhandene Signale in diesem Bereich ausgeblendet werden, daß die einzufügenden Daten in das gefensterte Mehrkanalübertragungssignal in den dafür gefensterten Zeit- und Frequenzbereich eingeblendet werden, daß zur zeitlichen Synchronisation ein mit dem Mehrkanalübertragungssignal übertragenes Zeitreferenzsymbol benutzt wird, wodurch eine zeitlich genaue Steuerung von Frequenzgeneratoren (12, 13) und eine zeitlich genaue Festlegung des Einfügungsbeginns und des Einfügungsendes von einzufügenden Daten erreicht wird und daß zur Frequenzsynchronisation ein mit dem Mehrkanalübertragungssignal übertragenes Frequenzreferenzsymbol benutzt wird, wodurch die genaue Steuerung der Frequenz der einzufügenden Daten und des gesendeten Mehrkanalübertragungssignals erreicht wird.

2. Verfahren nach Anspruch 1,
**dadurch gekennzeichnet, daß** im Null-Symbol (Null) ein Frequenzreferenzsymbol übertragen wird oder daß ein Zeit-Frequenz-Phasen-Referenzsymbol (TFPC) als Frequenzreferenzsymbol benutzt wird und daß im Frequenzreferenzsymbol ein oder mehrere Trägerfrequenzsignale übertragen werden.

3. Verfahren nach Anspruch 1,
**dadurch gekennzeichnet, daß** als Zeitreferenzsymbol ein Null-Symbol (Null) verwendet wird, in dem die übertragene Energie gering ist, und/oder daß ein Zeit-Frequenz-Phasen-Referenzsymbol (TFPC) als Zeitreferenzsymbol benutzt wird.

4. Verfahren nach einem der Ansprüche 1 bis 3,
**dadurch gekennzeichnet, daß** das Mehrkanalübertragungssignal in einer überregionalen Zentrale (ZE) erzeugt wird, daß einzufügende Daten in einer regionalen Zentrale (Z1, Z2, Z3, Z4) erzeugt werden, daß die einzufügenden Daten einem oder mehreren Sendern zugeführt werden, daß das Mehrkanalübertragungssignal im Gleichwellenbetrieb aller an die Zentrale (ZE) angeschlossenen Sender (S1, S2, S3, S4) abgestrahlt wird und daß die eingefügten Daten im Frequenz- und/oder Zeitmultiplexverfahren von den Sendern (S1, S2, S3, S4) abgestrahlt werden.

5. Verfahren nach einem der Ansprüche 1 bis 4,
**dadurch gekennzeichnet, daß** das von den Frequenzgeneratoren (12, 13) ausgegebene monofrequente Signal in Zeitschlitzen, in denen kein Frequenzreferenzsymbol übertragen wird, seine Frequenz ausreichend stabil hält und daß die Frequenz der Frequenzgeneratoren (12, 13) durch das Frequenzreferenzsymbol gesteuert wird.

6. Schaltungsanordnung mit einem Eingangssignal in einer Hochfrequenzlage zur Durchführung des Verfahrens nach einem der Ansprüche 1 bis 5,
**dadurch gekennzeichnet, daß** das Mehrkanalübertragungssignal nach einer ersten Filterung in einem Bandpaß (2) einer Baugruppe (4) zur zeitlichen Synchronisation, einem Mischer (7) zur Umsetzung von der Hochfrequenzlage in die Sendefrequenzlage mit einer anschließenden zweiten Filterung in einem Bandpaß (8) sowie einem dritten schmalbandigen Bandpaßfilter (10) zugeleitet wird, daß das Ausgangssignal der Baugruppe (4) zur zeitlichen Synchronisation einer Baugruppe (5) zur Einfügung von Daten, einer Baugruppe (9) zur Fensterung des Mehrkanalübertragungssignals und mindestens einem Frequenzgenerator (12, 13) zugeleitet wird, daß jedem Frequenzgenerator (12, 13) die mit dem Frequenzreferenzsymbol übertragene, durch eine Filterung in einem Bandpaß (10) des Mehrkanalübertragungssignals erzeugte Referenzfrequenz zugeleitet wird, daß das Ausgangssignal der Baugruppe (5) zur Einfügung von Daten in einem Mischer (6) mit dem Ausgangssignal eines Frequenzgenerators (13) gemischt wird und das Mischprodukt in einem Bandpaß (17) bandbegrenzt wird, daß in einer Baugruppe (14) zur Addition der einzufügenden Daten und des Mehrkanalübertragungssignals die beiden Signale addiert werden, daß das derart erhaltene Sendesignal nach einer vierten Filterung in einem Bandpaß (15) und Verstärkung in einem Verstärker (16) abgestrahlt wird.

7. Schaltungsanordnung mit einem Eingangssignal im Basisband zur Durchführung des Verfahrens nach einem der Ansprüche 1 bis 5,
**dadurch gekennzeichnet, daß** das Mehrkanalübertragungssignal nach einer Filterung in einem Tiefpaß (2) einer Baugruppe (4) zur zeitlichen Synchronisation zugeleitet wird, daß das Ausgangssignal dieser Baugruppe (4) einer Baugruppe (5) zur Einfügung von Daten, einer Baugruppe (9) zur Fensterung des Mehrkanalübertragungssignals und einem Frequenzgenerator (13) zugeleitet wird, daß dem Frequenzgenerator (13) die mit dem Frequenzreferenzsymbol übertragene, durch eine erste Filterung in einem Bandpaß (10) des Mehrkanalübertragungssignals erzeugte Referenzfrequenz zugeleitet wird, daß in einer Baugruppe (14) zur Addition der einzufügenden Daten und des gefensterten Mehrkanalübertragungssignals die beiden Signale addiert werden, daß das Ausgangssignal dieser Baugruppe (14) mit dem Ausgangssignal des Frequenzgenerators (13) in einem Mischer (6) in die Sendefrequenzlage gemischt wird und daß das derart erzeugte Sendesignal nach einer zweiten Filterung in einem Bandpaß (15) und Verstärkung in einem Verstärker (16) abgestrahlt wird.

8. Schaltungsanordnung mit einem Eingangssignal in der Sendefrequenzlage zur Durchführung des Verfahrens nach einem der Ansprüche 1 bis 5,
**dadurch gekennzeichnet, daß** das Mehrkanalübertragungssignal nach einer ersten Filterung in einem Bandpaß (2) einer Baugruppe (4) zur zeitlichen Synchronisation zugeleitet wird, daß das Ausgangssignal dieser Baugruppe (4) einer Baugruppe (5) zum Einfügen von Daten, einer Baugruppe (9) zur Fensterung des Mehrkanalübertragungssignals und einem Frequenzgenerator (13) zugeleitet wird, daß dem Frequenzgenerator (13) die mit dem Frequenzreferenzsymbol übertragene, durch eine Filterung in einem Bandpaß (10) erzeugte Referenzfrequenz zugeleitet wird, daß das Ausgangssignal der Baugruppe (5) zur Einfügung von Daten in einem Mischer (6) mit dem Ausgangssignal des Frequenzgenerators (13) in die Sendefrequenzlage gemischt und durch einen Bandpaß (17) begrenzt wird, daß in einer Baugruppe (14) zur Addition der einzufügenden Daten und des gefensterten Mehrkanalübertragungssignals die beiden Signale addiert werden und daß das derart erzeugte Sendesignal nach einer Filterung in einem Bandpaß (15) und Verstärkung in einem Verstärker (16) abgestrahlt wird.

9. Schaltungsanordnung mit einem Eingangssignal in der Sende- oder Hochfrequenzlage zur Durchführung des Verfahrens nach einem der Ansprüche 1 bis 5,
**dadurch gekennzeichnet, daß** das Mehrkanalübertragungssignal nach einer ersten Filterung in einem Bandpaß (2) einer Baugruppe (4) zur zeitlichen Synchronisation, einem Mischer (7) zur Umsetzung in die Basisband- oder eine Zwischenfrequenzlage mit einer anschließenden Filterung in einem Tiefpaß (18) sowie einem zweiten schmalbandigen Bandpaß (10) zugeleitet wird, daß das Ausgangssignal der Baugruppe (4) zur zeitlichen Synchronisation einer Baugruppe (5) zur Einfügung von Daten, einer Baugruppe (9) zur Fensterung des Mehrkanalübertragungssignals und mindestens einem Frequenzgenerator (12,13,) zugeleitet wird, daß jedem Frequenzgenerator (12,13) die mit dem Frequenzreferenzsymbol übertragene, durch eine Filterung des Mehrkanalübertragungssignals in einem Bandpaß (10) erzeugte Referenzfrequenz zugeleitet wird, daß in einer Baugruppe (14) zur Addition der einzufügenden Daten und des Mehrkanalübertragungssignals die beiden Signale addiert werden, daß das Summensignal in einem zweiten Mischer (6) mit dem Ausgangssignal eines Frequenzgenerators (13) in die Sendefrequenzlage gemischt und nach einer Filterung in einem Bandpaß (15) und Verstärkung in einem Verstärker (16) ausgesendet wird.

10. Schaltungsanordnung nach einem der Ansprüche 6 bis 9,
**dadurch gekennzeichnet, daß** als Baugruppe (4) zur zeitlichen Synchronisation ein Amplituden- bzw. Hüllkurvendetektor eingesetzt wird, daß als Baugruppe (5) zum Einfügen von Daten eine Schaltungsanordnung zum Erzeugen von Trägerfrequenzen, insbesondere aus binären Daten, verwendet wird, und daß als Baugruppe (9) zur Fensterung des Mehrkanalübertragungssignals ein Amplitudenmodulator verwendet wird.

11. Schaltungsanordnung nach einem der Ansprüche 6 bis 9,
**dadurch gekennzeichnet, daß** als Baugruppe (4) zur zeitlichen Synchronisation eine Steuereinheit zur Berechnung der Fouriertransformierten aus dem übertragenen Zeit-Frequenz-Phasen-Referenzsymbol (TFPC), zur Subtraktion eines gespeicherten idealen von dem übertragenen Zeit-Frequenz-Phasen-Referenzsymbol (TFPC) und zur Berechnung der inversen Fouriertransformierten aus dem Differenzsignal benutzt wird und daß die Steuereinheit nachfolgende Baugruppen (5,9,12,13) ansteuert, wenn die inverse Fouriertransformierte einen Mindestwert übersteigt.

12. Schaltungsanordnung nach einem der Ansprüche 6 bis 11,
**dadurch gekennzeichnet, daß** an verschiedenen Stellen der Schaltungsanordnung vorzugsweise vor und/oder nach Filtern (2,8,10,15), Verstärker (1, 3, 11) eingefügt werden.

13. Verfahren zum zeit- und frequenzsynchronen Einfügen von Daten in ein nach einem Mehrkanalübertragungsverfahren gebildetes Übertragungssignal, welches Synchronisationssymbole für eine Zeit- und Frequenzsynchronisation und eine Rahmenstruktur aufweist und in einem Gleichwellennetz übertragen wird,
**dadurch gekennzeichnet,**
**daß** das Mehrkanalübertragungssignal in dem für die einzufügenden Daten vorgesehenen Zeit- und Frequenzbereich gefenstert wird, wodurch vorhandene Signale in diesem Bereich ausgeblendet werden, daß die einzufügenden Daten in das gefensterte Mehrkanalübertragungssignal in den dafür gefensterten Zeit- und Frequenzbereich eingeblendet werden, daß zur zeitlichen Synchronisation und/oder zur Frequenzsynchronisation der einzufügenden Daten und des Mehrkanalübertragungssignals ein über ein Nachrichtennetz zur Weiterverarbeitung des Mehrkanalübertragungssignals mitübertragenes Taktsignal und/oder ein unabhängig vom Mehrkanalübertragungssignal empfangenes Referenzsignal benutzt wird, wodurch eine zeitlich genaue Steuerung von Frequenzgeneratoren (12, 13) und eine zeitlich genaue Festlegung des Einfügungsbeginns und des Einfügungsendes von einzufügenden Daten erreicht wird.

## Claims

1. Method of time-synchronous and frequency-synchronous insertion of data into a transmission signal that is formed according to a multi-channel transmission method and that comprises synchronization symbols for a time synchronization and frequency synchronization and a frame structure and is transmitted in a simultaneous broadcasting network, **characterized in that** the multi-channel transmission signal is windowed in the time range and frequency range provided for the data to be inserted, as the result of which signals present in this range are suppressed, **in that** the data to be inserted into the windowed multi-channel transmission signal are inserted into the time and frequency ranges windowed therefor, **in that** a time-reference symbol transmitted with the multi-channel transmission signal is used for time synchronization, as the result of which a temporally precise control of frequency generators (12, 13) and a temporally precise fixing of the start of insertion and of the end of insertion of data to be inserted is achieved, and **in that** a frequency-reference symbol transmitted with the multi-channel transmission signal is used for frequency synchronization, as a result of which the precise control of the frequency of the data to be inserted and of the multi-channel transmission signal transmitted is achieved.

2. Method according to Claim 1, **characterized in that** a frequency-reference symbol is transmitted in the zero symbol (zero) or **in that** a time-frequency phase reference symbol (TFPC) is used as frequency-reference symbol and **in that** one or more carrier-frequency signals are transmitted in the frequency-reference symbol.

3. Method according to Claim 1, **characterized in that** a zero symbol (zero), in which the transmitted energy is low, is used as time-reference signal and/or **in that** a time-frequency phase reference symbol (TFPC) is used as time-reference symbol.

4. Method according to one of Claims 1 to 3, **characterized in that** the multi-channel transmission signal is generated in a nationwide central station (ZE), **in that** data to be inserted are generated in regional stations (Zl, Z2, Z3, Z4), **in that** the data to be inserted are fed to one or more transmitters, **in that** the multi-channel transmission signal is broadcast in the common-frequency mode of all the transmitters (S1, S2, S3, S4) connected to the central station (ZE) and **in that** the inserted data are broadcast in the frequency-division and/or time-division multiplex method by the transmitters (S1, S2, S3, S4).

5. Method according to one of Claims 1 to 4, **characterized in that** the monofrequency signal emitted by the frequency generators (12, 13) keeps its frequency sufficiently stable in time slots in which no frequency-reference symbol is transmitted and **in that** the frequency of the frequency generators (12, 13) is controlled by the frequency-reference symbol.

6. Circuit having an input signal in a radio-frequency position for performing the method according to one of Claims 1 to 5, **characterized in that**, after a first filtering in a band-pass filter (2), the multi-channel transmission signal is fed to a time-synchronization assembly (4), a mixer (7) for converting the radio-frequency position to produce the transmission-frequency position with a subsequent second filtering in a band-pass filter (8) and also to a third narrow-band band-pass filter (10), **in that** the output signal of the time-synchronization assembly (4) is fed to a data-insertion assembly (5), a multi-channel transmission signal windowing assembly (9) and at least one frequency generator (12, 13), **in that** the reference frequency transmitted with the frequency-reference symbol and generated by filtering in a band-pass filter (10) of the multi-channel transmission signal is fed to each frequency generator (12, 13), **in that** the output signal of the data-insertion assembly (5) is mixed in a mixer (6) with the output signal of a frequency generator (13) and the mixing product is band-limited in a band-pass filter (17), **in that** the two signals are added in an assembly (14) for the addition of the data to be inserted and of the multi-channel transmission signal, and **in that** the broadcast signal obtained in this way is broadcast after a fourth filtering in a band-pass filter (15) and amplification in an amplifier (16).

7. Circuit having an input signal in the base band for performing the method according to one of Claims 1 to 5, **characterized in that**, after a filtering in a low-pass filter (2), the multi-channel transmission signal is fed to a time-synchronization assembly (4), **in that** the output signal of said assembly (4) is fed to a data-insertion assembly (5), a multi-channel transmission signal windowing assembly (9) and a frequency generator (13), **in that** the reference frequency transmitted with the frequency-reference symbol and generated by a first filtering in a band-pass filter (10) of the multi-channel transmission signal is fed to the frequency generator (13), **in that** the two signals are added in an assembly (14) for the addition of the data to be inserted and of the windowed multi-channel transmission signal, **in that** the output signal of said assembly (14) is mixed in a mixer (6) with the output signal of the frequency generator (13) to produce the broadcast-frequency position and **in that** the broadcast signal generated in this way is broadcast after a second filtering in a band-pass filter (15) and amplification in an amplifier (16).

8. Circuit having an input signal in the broadcast frequency position for performing the method according to one of Claims 1 to 5, **characterized in that**, after a first filtering in a band-pass filter (2), the multi-channel transmission signal is fed to a time-synchronization assembly (4), **in that** the output signal of said assembly (4) is fed to a data-insertion assembly (5), a multi-channel transmission signal windowing assembly (9) and a frequency generator (13), **in that** the reference frequency transmitted with the frequency-reference symbol and generated by filtering in a band-pass filter (10) is fed to the frequency generator (13), **in that** the output signal of the data-insertion assembly (5) is mixed in a mixer (6) with the output signal of the frequency generator (13) to produce the broadcast-frequency position and is limited by a band-pass filter (17), **in that** the two signals are added in an assembly (14) for the addition of the data to be inserted and of the windowed multi-channel transmission signal and **in that** the broadcast signal generated in this way is broadcast after filtering in a band-pass filter (15) and amplification in an amplifier (16).

9. Circuit having an input signal in the broadcast-frequency or radio-frequency position for performing the method according to one of Claims 1 to 5, **characterized in that**, after a first filtering in a band-pass filter (2), the multi-channel transmission signal is fed to a time-synchronization assembly (4), a mixer (7) for conversion to produce the base-band position or an intermediate-frequency position with subsequent filtering in a low-pass filter (18) and also to a second narrow-band band-pass filter (10), **in that** the output signal of the time-synchronization assembly (4) is fed for time synchronization to a data-insertion assembly (5), a multi-channel transmission signal windowing assembly (9) and at least one frequency generator (12, 13), **in that** the reference frequency transmitted with the frequency-reference symbol and generated by filtering of the multi-channel transmission signal in a band-pass filter (10) is fed to each frequency generator (12, 13), **in that** the two signals are added in an assembly (14) for the addition of the data to be inserted and of the multi-channel transmission signal, and **in that** the sum signal is mixed in a second mixer (6) with the output signal of a frequency generator (13) to produce the broadcast-frequency position and is broadcast after filtering in a band-pass filter (15) and amplification in an amplifier (16).

10. Circuit according to one of Claims 6 to 9, **characterized in that** an amplitude or envelope detector is used as time-synchronization assembly (4), **in that** a circuit for generating carrier frequencies, in particular from binary data, is used as data-insertion assembly (5) and **in that** an amplitude modulator is used as multi-channel transmission signal windowing assembly (9).

11. Circuit arrangement according to one of Claims 6 to 9, **characterized in that** a control unit for calculating the Fourier transform from the transmitted time-frequency-phase reference symbol (TFPC), for the subtraction of a stored, ideal time-frequency-phase reference symbol from the transmitted time-frequency-phase-reference symbol (TFPC) and for calculating the inverse Fourier transform from the differential signal is used as time-synchronization assembly (4) and **in that** the control unit activates subsequent assemblies (5, 9, 12, 13) if the inverse Fourier transform exceeds a minimum value.

12. Circuit arrangement according to one of Claims 6 to 11, **characterized in that** amplifiers (1, 3, 11) are inserted at various points in the circuit, preferably upstream and/or downstream of filters (2, 8, 10, 15).

13. Method of time-synchronous and frequency-synchronous insertion of data into a transmission signal that is formed by a multi-channel transmission method and that comprises synchronization signals for a time synchronization and frequency synchronization and a frame structure and is transmitted in a simultaneous broadcasting network, **characterized in that** the multi-channel transmission signal is windowed in the time range and frequency range provided for the data to be inserted, as a result of which signals present in said range are suppressed, **in that** the data to be inserted are inserted into the windowed multi-channel transmission signal in the time range and frequency range windowed therefor, and **in that** a clock signal concomitantly transmitted via a communications network for the purpose of further processing the multi-channel transmission signal and/or a reference signal received independently of the multi-channel transmission signal is used for the time synchronization and/or for the frequency synchronization of the data to be inserted and of the multi-channel transmission signal, as the result of which a temporally precise control of frequency generators (12, 13) and a temporally precise fixing of the start of insertion and of the end of insertion of the data to be inserted is achieved.

## Revendications

1. Procédé pour l'insertion de données, d'une manière synchronisée dans le temps et en fréquence, dans un signal de transmission formé selon un procédé de transmission à canaux multiples et qui comporte des symboles de synchronisation pour une synchronisation dans le temps et une synchronisation en fréquence et une structure de trame et est transmis dans un réseau à fréquence commune, **caractérisé en ce que** le signal de transmission à canaux multiples est fenêtré dans la gamme de temps et de fréquences prévue pour les données devant être insérées, ce qui a pour effet que des signaux présents dans cette gamme sont occultés, que les données devant être insérées sont injectées dans le signal fenêtré de transmission à canaux multiples dans la gamme de temps et de fréquences fenêtrée à cet effet, que pour la synchronisation dans le temps on utilise un symbole de référence temporel, qui est transmis avec le signal de transmission à canaux multiples, ce qui a pour effet qu'on obtient une commande précise dans le temps de générateurs de fréquences (12, 13) et une détermination précise dans le temps du début de l'insertion et de la fin de l'insertion de données devant être insérées, et que pour la synchronisation de fréquence on utilise un symbole de référence de fréquence transmis avec le signal de transmission à canaux multiples, si elle permet d'obtenir la commande précise de la fréquence des données devant être insérées et du signal de transmission à canaux multiples, émis.

2. Procédé selon la revendication 1, **caractérisé en ce qu'**un symbole de référence de fréquence est transmis dans le symbole zéro (zéro) ou qu'on utilise un symbole de référence de phase de temps-fréquence-phase (TFPC) en tant que symbole de référence de fréquence et qu'un ou plusieurs signaux à fréquences porteuses sont transmis dans le symbole de référence de fréquence.

3. Procédé selon la revendication 1, **caractérisé en ce qu'**on utilise comme symbole de référence de temps un symbole zéro (zéro), dans lequel l'énergie transmise est faible et/ou qu'on utilise un symbole de référence de temps-fréquence-phase (TFPC) en tant que symbole de référence de temps.

4. Procédé selon l'une des revendications 1 à 3, **caractérisé en ce que** le signal de transmission à canaux multiples est produit dans un central (ZE) d'un niveau supérieur au niveau régional, que les données devant être insérées sont produites dans un central régional (Z1, Z2, Z3, Z3), que les données devant être insérées sont envoyées à un ou plusieurs émetteurs, que le signal de transmission à canaux multiples est émis dans le fonctionnement en onde commune à fréquence commune lors du fonctionnement à fréquence commune de tous les émetteurs (S1, S2, S3, S4) raccordés au central (ZE) et que les données insérées sont émises dans le procédé de multiplexage de fréquence et/ou de multiplexage temporel par les émetteurs (S1, S2, S3, S4).

5. Procédé selon l'une des revendications 1 à 4, **caractérisé en ce que** le signal à une seule fréquence, qui est émis par les générateurs de fréquences (12, 13) conserve d'une manière suffisamment stable sa fréquence dans des créneaux temporels, dans lesquels aucun symbole de référence de fréquence n'est transmis, et que la fréquence des générateurs de fréquences (12, 13) est commandée par le symbole de référence de fréquence.

6. Montage comportant un signal d'entrée situé dans une position de haute fréquence pour la mise en oeuvre du procédé selon l'une des revendications 1 à 5, **caractérisé en ce que** le signal de transmission à canaux multiples est envoyé, après un premier filtrage dans un filtre passe-bande (2), à un module (4) servant à réaliser la synchronisation temporelle, un mélangeur (7) servant à convertir la position de haute fréquence en la position de fréquence d'émission avec un second filtrage suivant effectué dans un filtre passe-bande (8), ainsi qu'un troisième filtre passe-bande à bande étroite (10), que le signal de sortie du module (4) pour la synchronisation temporelle d'un module (5) est envoyé, pour la synchronisation temporelle, à un module (5) pour l'insertion de données, un module (9) pour le fenêtrage du signal de transmission à canaux multiples et au moins un générateur de fréquences (12, 13), que le signal de référence, qui est transmis avec le symbole de référence de fréquence et est produit par filtrage du signal de transmission à canaux multiples dans un filtre passe-bande (10), est envoyé à chaque générateur de fréquences (12, 13), que le signal de sortie du module (5) pour l'insertion de données est mélangé, dans un mélangeur (6), au signal de sortie d'un générateur de fréquences (13) et que la bande du produit de mélange est limitée dans un filtre passe-bande (17), que les deux signaux sont additionnés dans un module (14) servant à réaliser l'addition des données à insérer et du signal de transmission à canaux multiples, et que le signal d'émission obtenu de cette manière est émis, après une quatrième filtrage dans un filtre passe-bande (15) et amplification dans un amplificateur (16).

7. Montage comportant un signal d'entrée dans la bande de base pour la mise en oeuvre du procédé selon l'une des revendications 1 à 5, **caractérisé en ce que** le signal de transmission canaux multiples est envoyé après filtrage dans un filtre passe-bande (2) à un module (4) de synchronisation temporelle, que le signal de sortie de ce module (4) est envoyé à un module (5) pour l'insertion de données, un module (9) pour le fenêtrage du signal de transmission à canaux multiples et un générateur de fréquences (13), que le générateur de fréquences (13) et que le signal de référence transmis avec le symbole de référence de fréquence et produit par un premier filtrage dans un filtre passe-bande (10) du signal de transmission à canaux multiples, est envoyé au générateur de fréquences (13), que les deux signaux sont additionnés dans un module (14) servant à additionner les données devant être introduites et le signal fenêtré de transmission à canaux multiples, que le signal de sortie de ce module (14) est mélangé au signal de sortie du générateur de fréquences (13) dans un mélangeur (6), dans la position de fréquence d'émission et que le signal d'émission ainsi obtenu est émis après un second filtrage dans un filtre passe-bande (15) et après une amplification dans un amplificateur (16).

8. Montage comportant un signal d'entrée situé dans la position de fréquence d'émission pour la mise en oeuvre du procédé selon l'une des revendications 1 à 5, **caractérisé en ce que** le signal de transmission à canaux multiples est envoyé, après un premier filtrage dans le filtre passe-bande (2), à un module (4) pour la synchronisation temporelle, que le signal de sortie de ce module (4) est envoyé à un module (5) pour l'insertion de données, à un module (9) pour le fenêtrage du signal de transmission à canaux multiples et à un générateur de fréquences (13), que la fréquence de référence, qui est transmise au symbole de référence de fréquence et est produite par un filtrage dans un filtre passe-bande (10), est envoyée au générateur de fréquences (13), que le signal de sortie du module (5) pour l'insertion de données est mélangé dans un mélangeur (6) au signal de sortie du générateur de fréquences (13) dans la position de fréquence d'émission et est limité par un filtre passe-bande (17), que les deux signaux sont additionnés dans un module (14) pour l'addition des données devant être insérées et du signal fenêtré de transmission à canaux multiples et que le signal d'émission produit est émis après un filtrage dans un filtre passe-bande (15) et amplification dans un amplificateur (16).

9. Montage comportant un signal d'entrée dans la position de fréquence d'émission ou de position de fréquence élevée pour la mise en oeuvre du procédé selon l'une des revendications 1 à 5, **caractérisé en ce que** le signal de transmission à canaux multiples est envoyé après un premier filtrage dans un filtre passe-bande (2) d'un module (4) utilisé pour la synchronisation temporelle, à un mélangeur (7) pour sa conversion dans la position de la bande de base ou dans une position de fréquence intermédiaire, moyennant un filtrage suivant dans un filtre passe-bas (18), ainsi qu'un second filtre passe-bande à bande étroite (10), que le signal de sortie du module (4) pour la synchronisation temporelle est envoyé à un module (5) pour l'insertion de données, à un module (9) pour le fenêtrage du signal de transmission à canaux multiples et au moins un générateur de fréquences (12, 13), que la fréquence de référence transmise avec le symbole de référence de fréquence et produite par un filtrage du signal de transmission à canaux multiples dans un filtre passe-bande (10) est envoyée à chaque générateur de fréquences (12, 13), que les deux signaux sont additionnés dans un module (14) servant à additionner les données devant être introduites et le signal de transmission à canaux multiples, que le signal somme est mélangé, dans un second mélangeur (6), au signal de sortie d'un générateur de fréquences (13) dans la position de fréquence d'émission et est émis après un filtrage dans un filtre passe-bande (15) et une amplification dans un amplificateur (16).

10. Montage selon l'une des revendications 6 à 9, **caractérisé en ce qu'**on utilise comme module (4) pour la synchronisation temporelle un détecteur d'amplitude ou un détecteur de courbe enveloppe, qu'on utilise comme module (5) pour l'insertion de données un montage pour produire des fréquences porteuses, notamment à partir de données binaires, et qu'on utilise comme module (9) pour le fenêtrage du signal de transmission à canaux multiples un module d'amplitude.

11. Montage selon l'une des revendications 6 à 9, **caractérisé en ce qu'**on utilise comme module (4) pour la synchronisation temporelle une unité de commande pour le calcul de la transformation de Fourier à partir du symbole de référence de temps-fréquence-phase (TFPC) transmis, pour soustraire un symbole de référence de temps temps-fréquence-phase (TFPC) idéal mémorisé du symbole de temps-fréquence-phase (TFPC) transmis et pour le calcul de la transformée de Fourier inverse à partir du signal de différence, et que l'unité de commande commande des modules suivant (8, 9, 12, 13), lorsque la transformée de Fourier inverse dépasse une valeur minimale.

12. Montage selon l'une des revendications 6 à 11, **caractérisé en ce que** des amplificateurs (1, 3, 11) sont insérés en différents emplacements du montage de préférence en amont et/ou en aval de filtres (2, 8, 12, 15).

13. Procédé d'insertion pour l'insertion d'une manière synchrone du point de vue temps et fréquence de données dans un signal de transmission formé selon un procédé de transmission à canaux multiples et qui comporte des symboles de synchronisation pour une synchronisation dans le temps et une synchronisation en fréquence et une structure de trame et est transmis dans un réseau à fréquence commune, **caractérisé en ce que** le signal de transmission à canaux multiples est fenêtré dans la gamme de temps et de fréquences prévue pour les données à insérer, ce qui a pour effet que les canaux des signaux existants sont occultés dans cette gamme, que les données devant être insérées sont injectées dans le signal fenêtré de transmission à canaux multiples dans la gamme de temps et de fréquences, fenêtrée à cet effet, que pour la synchronisation temporelle et/ou pour la synchronisation de fréquences des données devant être insérées et du signal de transmission à canaux multiples, on utilise un signal de cadence transmis conjointement par l'intermédiaire du réseau de transmission d'informations pour la poursuite du traitement du signal de transmission à canaux multiples et/ou un signal de référence reçu indépendamment du signal de transmission à canaux multiples, ce qui a pour effet qu'on obtient une commande temporelle précise de générateurs de fréquences (12, 13) et une détermination précise dans le temps du début de l'insertion et de la fin de l'insertion de données devant être insérées.
